# EUROPEAN PATENT SPECIFICATION

(11) **EP 1 357 777 B1**
(45) Date of publication and mention of the grant of the patent: **14.11.2007**
(21) Application number: 02009192.2
(22) Date of filing: 25.04.2002
(51) Int. Cl.: H05K 7/20, G06F 1/20

(54) **Heat dissipation connector with USB port**
Wärmezerstreuender Verbinder mit einem USB-Port
Connecteur dissipant la chaleur avec un port USB

(43) Date of publication of application: 29.10.2003
(73) Proprietor: Lei, Mandy, Taoyuan (TW)
(72) Inventor: Lei, Mandy, Taoyuan (TW)
(74) Representative: Muttock, Neil John

(56) References cited:
- US-A- 6 104 607
- US-B1- 6 239 971

## Description

### BACKGROUND OF THE INVENTION

### 1. Field of the invention

This invention relates to a heat dissipation connector with at least two USB (Universal Serial Bus) ports, especially to a heat dissipation connector made use of one USB port to get electric power of DC 5V, supplied from an USB port of PC (Personal Computer) or notebook computer, to drive DC fans to dissipate heat away from electric appliance, and made use of the other USB port to provide a function for transmission speeds of 12 megabits per second and supply DC 5V for other use.

### 2. Description of the related art

As is known to all, heat or temperature, if surpassed to a critical level, is a terrible killer for all electric appliance happened to out of order, and the electric appliance shall be a much serious problem in operation if not immediately dissipated heat away from its operated environment much sooner. Thus, so many engineers try their best to invent any kinds of effective cooling device or cooler to solve the problem of heat or temperature influenced on electric appliance, particularly on PC or notebook computer, among those cooling device or cooler designed, including some kind of CPU cooler or slim fan developed to adhere on the top of CPU or directly build-in a less space inside a notebook computer for cooling respectively. For notebook computer, there has another kind of cooling rack invented and disclosed on US Pat. No. 6,239,971 B1 or DE Pat. No. 20013029 U1 for dissipating heat away from the notebook computer more effectively during operation.

In addition, a PC or notebook computer has one or more USB ports as a standard specification in recent. The USB port may provide a function for not only supporting transmission speeds of 12 megabits per second to a connected devices such as a printer, a scanner and the like, but also supplying low-level power of DC 5V to a connected device such as a keyboard, a mouse and the like.

Therefore, it is a practical ideal to figure out a heat dissipation connector with at least two USB ports. And, it is probably another way to solve the problem of how dissipating heat away from electric appliance, particularly for PC or notebook computer. To use one USB port of the heat dissipation connector to get electric power of DC 5V from a USB ports of PC or notebook computer to drive DC fans to dissipate heat, and to use the other USB port of the heat dissipation connector to provide the same function as an USB port of PC or notebook computer originally does.

Accordingly, a heat dissipation connector is additionally connected to an USB port of PC or notebook to do heat dissipation directly operated to the PC or notebook. Meanwhile, the heat dissipation connector also provides the other USB port for use. By use of this invention of heat dissipation connector, PC or notebook computer still has one or more USB ports provided to be used, due to the other USB port of the heat dissipation connector substituted for the USB ports of PC or notebook which is connectedly used.

### SUMMARY OF THE INVENTION

It is an object of the invention to provide an external heat dissipation device with at least two USB ports capably by USB cable connected with an USB ports of USB ports of PC or notebook computer to do heat dissipation directly operated to the USB ports of PC or notebook computer.

Another object of the invention is no AC/DC converters or DC/DC converters necessary and just makes the use of one USB port of the invention to get electric power of DC 5V from a USB port of PC or notebook computer to drive DC fans to do heat dissipation.

A further object of the invention is to provide an external USB connector to a PC or a notebook computer using the other USB port of this invention to provide a function for transmission speeds of 12 megabits per second and supply DC 5V for other use.

It is a further feature of the invention to provide a pair of U-shaped supports used to support and direct the heat dissipation connector faced to the PC or notebook computer when doing heat dissipation at a distance.

It is one more feature of the invention used to directly contact with PC or notebook computer to force heat quickly dissipated away under the situation of U-shaped supports are separated out from the heat dissipation connector.

### BRIEF DESCRIPTION OF THE DRAWINGS

The invention will be better understood by reference to the following drawings when reading the description of the invention contained herein:
FIG. 1 is a perspective drawing of the invention to show a heat dissipation connector of the invention capably used beside relative electric appliance to do heat dissipation.
FIG. 2 is an explanatory drawing of the invention to indicate the back of the invention having four positioning strips as a spacer for positioning the pair of U-shaped supports securely and the pair U-shaped supports are removable if necessary.
FIG. 3 is an exploded drawing of heat dissipation connector of the invention.
FIG. 4 is a schematic drawing to indicate PC or notebook computer directly contact to the invention to force heat quickly dissipated when the pair of U-shaped supports removed.
FIG. 5 is another schematic drawing of FIG. 4 to show heat dissipation connector of the invention how to force heat quickly dissipated.

### DETAILED DESCRITION OF THE PREFERRED EMBODIMENTS

The features and advantages of this invention are described in this specification in conjunction with the drawings illustrating a preferred embodiment of the invention.

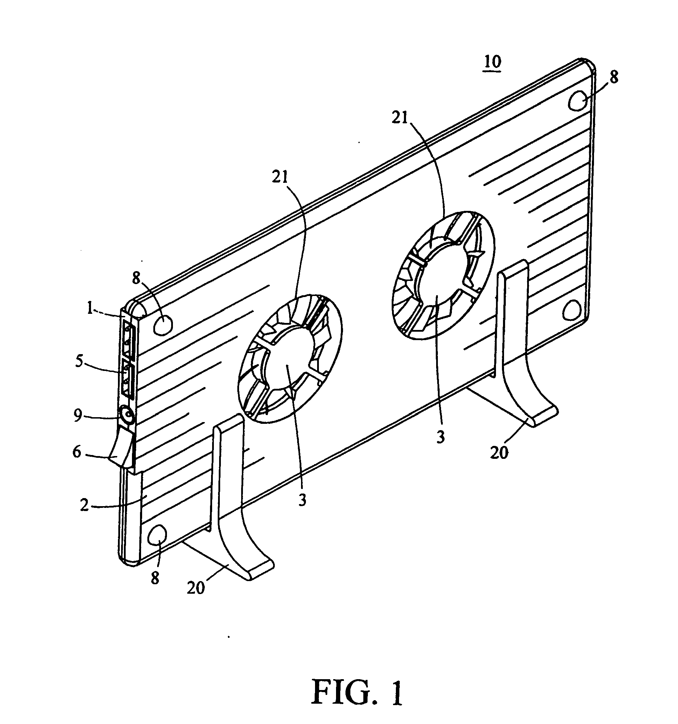

Referring to FIG. 1, a heat dissipation connector 10 of the invention is an externally auxiliary heat dissipation device just used beside relative electric appliance such as PC, notebook computer or the like to make those electric appliance do work more normally. And, the heat dissipation connector 10 of the invention is also an externally auxiliary connector which can provide two or more USB ports 5 conveniently connected with relative electric appliance such as a printer, a scanner, a keyboard, a mouse and the like to do work.

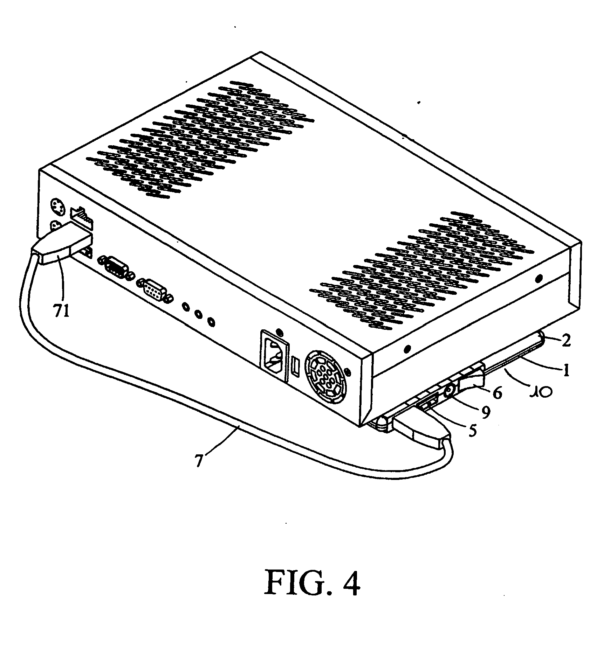

Shown as FIG. 4, one USB port 5 of said heat dissipation connector 10 of the invention is used as power supply by an USB cable 7 connected with an electric appliance which can directly supply electric power of DC 5V from its relative USB port. Therefore, no AC/DC converters or DC/DC converters are needed. Users can use said heat dissipation connector 10 of the invention so convenient as an externally auxiliary heat dissipation device for relative electric appliance used anywhere. And, the other one or more USB ports 5 provided from the said heat dissipation connector 10 of the invention are used to provide relative electric appliance having more externally auxiliary USB ports 5 to be used. User can make use of said heat dissipation connector 10 of the invention as an externally auxiliary USB port connector to relative electric appliance simultaneously, when using said heat dissipation connector 10 of the invention beside relative electric appliance to do heat dissipation.

Accordingly, said heat dissipation connector 10 of the invention is invented when used to relative electric capably to provide dual function like combined a heat dissipation device and an auxiliary USB port connector, and no AC/DC converters or DC/DC converters are needed.

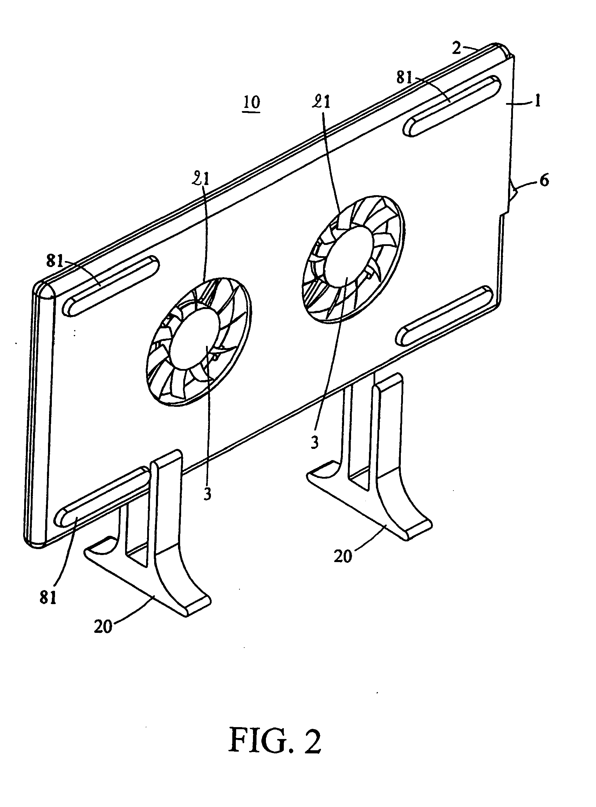

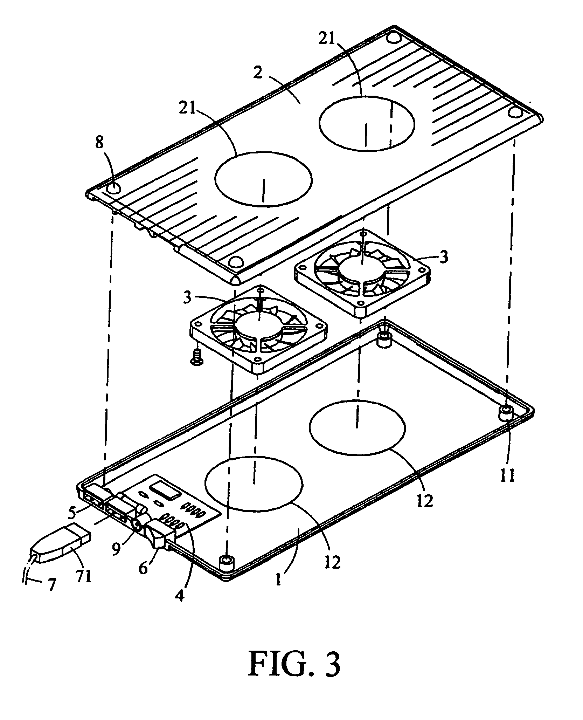

Referring from FIG. 1 through FIG. 3, the structure of said heat dissipation connector 10 of the invention comprises a front cover 2, which is a rectangle cover with four outwardly extended edges and provided with one or more air outlet openings 21 on its rectangle face, in a preferred embodiment the front cover having two air outlet openings 21; a back cover 1, which is also a rectangle cover with four outwardly extended edges relative to said front cover 2, and which provided with one or more air inlet openings 12 relative to said air outlet openings 21 of said front cover 1, with four positioning strips 81 used as a spacer formed at each corner of its rectangle face, and with four bosses 11 respectively formed at inside comers of said back cover 1 used to connect said back cover 1 with said front cover 2; a pair of removable U-shaped supports 20, which each has an U-shaped recess to make said back cover 1 and said front cover 2 wholly inserted into and which lateral sides are respectively used against said positioning strips 81 of said back cover 1 to make said front cover 2 and said back cover 1 stood up securely and put beside relative electric appliance more easily; one or more DC fans 3, which each may be driven to rotate with DC 5V supplied and which location of each installed inside said front cover 2 with screws. The air outlet of said DC fans 3 is positioned directly relative to said air outlet openings 21 of said front cover 2 so that the air inlet of said DC fans 3 is directly relative to said air inlet openings 11 of said back cover 1 thereof; two or more USB ports 5, which are installed on lateral end of both said front cover 2 and said back cover 1, one of USB ports 5 is used to supply power with DC 5V to said DC fans 3 by an USB cable 7 with an USB plug 71 to plug into said USB port 5, and the other one or more USB ports 5 are useful to provide relative electric appliance to another use; and an electronic control circuit board 4, which is installed inside said back cover 1 to control one USB port 5 to get electric power of DC 5V supplied from the relative electric appliance to drive DC fans to rotate, and to control the other USB port 5 to provide a function for transmission speeds of 12 megabits per second and supply DC 5V for another use.

In addition, there are four supporting blocks 8 formed on each comer of the rectangle face of said front cover 2 to become another embodiment of the invention. The height of said supporting blocks 8 is used to form a gap for air draw in or driven out, when the said heat dissipation connector 10 is directly put on or under relative electric appliance to do forced heat dissipation by immediately separating said U-shaped supports 20 from said front cover 2 and said back cover 1.

Moreover, the heat dissipation connector 10 may additionally provide a DC 12V socket 9 in a third embodiment of the invention. Under control of switch 6 switched on said DC 12V socket 9 can get electric power of DC 12V supplied from cigarette lighter of a motor vehicle, and may supply DC 5V converted from said electronic control circuit board 4 to said DC fans 3 for rotation. Thus, the heat dissipation connector 10 of the invention may be in use inside a motor vehicle to do heat dissipation and provide more UBS ports 5 for another use.

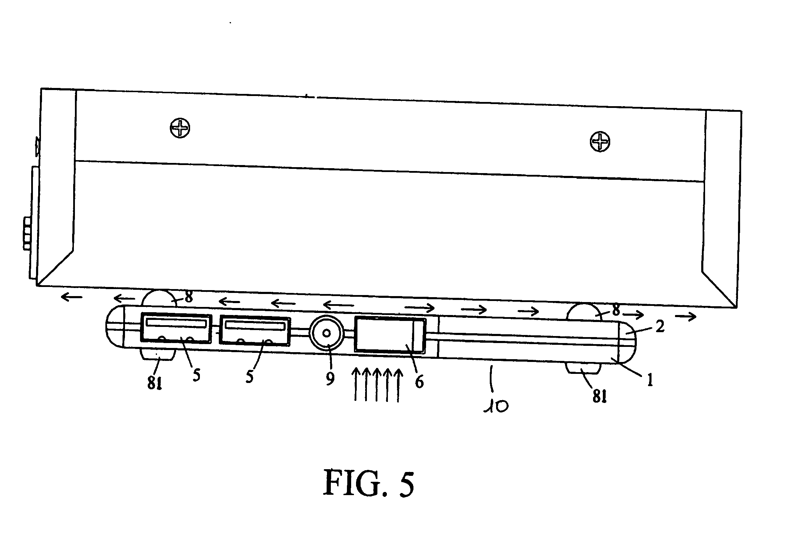

A PC using a heat dissipation connector 10 of the invention to do heat dissipation is taken as an example. Referring to FIG. 1, 4 and 5, the heat dissipation connector 10 is used as an externally auxiliary heat dissipation device beside relative PC by using an USB cable 7 connected one USB port 5 of said heat dissipation connector 10 with an UBS port of the PC. Said heat dissipation connector 10 is then operated to do heat dissipation away from relative PC due to air drawn into from said air inlet openings 12 of said back cover 1, forcedly driven out of from said air outlet openings 21 of said front cover 2 by using said DC fans rotated, and directly blown to relative PC to do heat dissipation. And, one or more USB ports 5 of said heat dissipation connector 10 are additionally to provide other electric appliance for use so that said heat dissipation connector 10 can become an external auxiliary connector for relative PC too. No AC/DC converters or DC/DC converters are needed

When said heat dissipation connector 10 is used to force heat quickly dissipated away from relative PC, by separating said U-shaped supports 20 from said front cover 2 and said back cover 1, the PC, therefore, can put on said heat dissipation connector 10. Said supporting blocks 8 formed on said front cover 2 are used to support the weight of the PC and get a distance between said heat dissipation connector 10 and the PC for heat dissipation. And, said positioning strips 81 of said back cover 1 are used as supporting feet to get a distance between said heat dissipation connector 10 and the ground for air drawn in and driven out to do heat dissipate away from the PC. Under this situation, one or more USB ports 5 of said heat dissipation connector 10 still can provide other electric appliance for auxiliary use, if necessary.

## Claims

1. A heat dissipation connector (10) with at least two USB ports (5) comprising:
a front cover (2), which is a rectangle cover with four outwardly extended edges and at least one air outlet openings (21) on its rectangle face;
a back cover (1), which is positioned relative to said front cover (2) and is a rectangle cover with four outwardly extended edges and with at least one air inlet openings (12) positioned relative to said air outlet openings (21) of said front cover (2), and which is provided with four positioning strips (81) formed at each corner of its rectangle face and used as a spacer respectively;
a pair of U-shaped supports (20), which are respectively positioned against two spaced positioning strips (81) of said back cover (1) to capably make said front cover (2) and said back cover (1) stood up securely;
at least one DC fans (3), which air outlet is positioned relative to said air outlet openings (21) of said front cover (2) and air inlet is positioned relative to said air inlet openings (12) of said back cover (1), **characterized by**
at least two USB ports (5), which are installed on lateral end of both said front cover (2) and said back cover (2), and one USB ports (5) used to supply power with DC 5V to said DC fans (3) by an USB cable (7); and
an electronic control circuit board (4), which is installed inside said back cover (1), to control one of the USB port (5) to get electric power of DC 5V supplied from an electric appliance to drive said DC fans (3) to rotate for dissipating heat away from said electric appliance, and to control the other USB port (5) to provide a function for transmission speeds of 12 megabits per second and supply DC 5V for another use.

2. The heat dissipation connector according to claim 1, wherein said front cover (2) is provided with two air outlet openings (21), said cover (1) is provided relative air outlet openings (12) and two DC fans (3) are relatively positioned between two opposite air openings (12,21) of said front cover and said back cover.

3. The heat dissipation connector according to claim 1 or claim2, further comprises a DC 12V socket (9) and a switch (6), which said DC 12V socket (9) can get electric power of DC 12V supplied from cigarette lighter of a motor vehicle when said switch (6) is switched on and converted as DC 5V under control of said electronic control circuit board (4).

4. The heat dissipation connector according to claim 3, wherein four supporting blocks (8) are further formed on each corner of the rectangle face of said front cover (2).

## Patentansprüche

1. Wärme ableitender Verbinder (10) mit wenigstens zwei USB-Ports, bestehend aus:
einer Frontabdeckung (2) in Form eines rechteckigen Deckels mit vier nach außen hin verbreiterten Kanten und wenigstens einer Luftauslassöffnung (21) in seiner rechteckigen Fläche;
einer Rückwand (1), die passend zu der besagten Frontabdeckung (2) platziert und als rechteckiger Deckel mit vier nach außen hin verbreiterten Kanten ausgeführt ist und wenigstens eine passend zu der besagten Luftauslassöffnung (21) der besagten Frontabdeckung (2) platzierte Lufteinlassöffnung (12) aufweist, und die vier an jeder Ecke ihrer Rechteckfläche ausgebildete Haltestreifen (81) besitzt, die jeweils als Distanzstücke dienen;
einem Paar U-förmiger Tragelemente (20), die jeweils gegen zwei der im Abstand voneinander angeordneten Haltestreifen (82) der besagten Rückwand (1) liegend angeordnet sind, so dass die besagte Frontabdeckung (2) und die besagte Rückwand (1) sicher hochkant gestellt werden können;
wenigstens einem DC-Lüfter (3), dessen Luftauslass passend zu der besagten Luftauslassöffnung (21) der besagten Frontabdeckung (2) platziert ist, und dessen Lufteinlass passend zu der besagten Lufteinlassöffnung (12) der besagten Rückwand (1) platziert ist, **gekennzeichnet durch**
wenigstens 2 sowohl auf der Seite der besagten Frontabdeckung als auch der Seite der besagten Rückwand installierte USB-Ports (5) und einen USB Port (5) zur Stromversorgung besagter DC-Lüfter (3) mit 5V Gs über ein USB-Kabel (7), und
eine auf der Innenseite der besagten Rückwand (1) montierten Elektronik-Steuerplatine (4) zur Steuerung eines der USB-Ports (5) zur Versorgung mit 5 V Gs aus einem Elektrogerät für den Drehbetrieb der besagten DC-Lüfter (3) zur Ableitung von Wärme aus dem besagtem Elektrogerät und zur Steuerung der anderen USB-Ports (5) mit einer Funktion für Übertragungsgeschwindigkeiten von bis zu 12 Megabit pro Sekunde und die Bereitstellung von 5 V Gs für einen anderen Zweck.

2. Wärme ableitender Verbinder gemäß Anspruch 1, bei dem die besagte Frontabdeckung (2) mit zwei Luftauslassöffnungen (21) ausgestattet ist und auf der besagten Rückwand (1) zwei Lufteinlassöffnungen (12) und zwei DC-Lüfter (3) passend zwischen zwei einander gegenüberliegenden Lüftungsöffnungen (12, 21) der besagten Frontabdeckung und der besagten Rückwand angeordnet sind.

3. Wärme ableitender Verbinder gemäß Anspruch 1. oder 2, des weiteren ausgestattet mit einer 12 V Gs-Steckbuchse (9) sowie einem Schalter (6) , wobei die die Leistungsaufnahme der besagten 12 V Gs-Steckbuchse (9) über den Zigarrenanzünder eines Kraftfahrzeugs erfolgen kann, wenn der besagte Schalter (6) eingeschaltet ist, und dann unter Steuerung durch die besagte Elektronik-Steuerplatine (4) in 5 V Gs umgewandelt wird.

4. Wärme ableitender Verbinder gemäß Anspruch 3, bei dem vier Tragblöcke (8) an den einzelnen Ecken der Rechteckfläche der besagten Frontabdeckung (2) ausgebildet sind.

## Revendications

1. Connecteur de dissipation thermique (10) avec au moins deux ports USB (5) comportant :
un capot avant (2), qui est un capot rectangulaire ayant quatre bords s'étendant vers l'extérieur et des ouvertures de sortie d'air (21), au moins une, sur sa face rectangulaire ;
un capot arrière (1), qui est positionné par rapport audit capot avant (2) et qui est un capot rectangulaire ayant quatre bords s'étendant vers l'extérieur et des ouvertures d'admission d'air (18), au moins une, positionnées par rapport auxdites ouvertures de sortie d'air (21) dudit capot avant (2) et ayant quatre baguettes de positionnement (81) formées au niveau de chaque angle de sa face rectangulaire et servant respectivement de pièces d'écartement;
une paire de supports en forme de U (20), qui sont positionnés respectivement contre deux baguettes de positionnement espacées (82) dudit capot arrière (1) pour faire tenir, de manière compétente, ledit capot avant (2) et ledit capot arrière (1) debout de manière sûre ;
des ventilateurs à courant continu (3), au moins un, dont la sortie d'air est positionnée par rapport auxdites ouvertures de sortie d'air (21) dudit capot avant (2) et dont l'admission d'air est positionnée par rapport auxdites ouvertures d'admission d'air (12) dudit capot arrière (1) **caractérisé par**
au moins deux ports USB (5), qui sont installés sur une extrémité latérale à la fois dudit capot avant (2) et dudit capot arrière (1), et un port USB (5) servant à alimenter 5 V CC auxdits ventilateurs à courant continu (3) par le biais d'un câble USB (7) ; et
une carte de circuit de commande électronique (4), qui est installée à l'intérieur dudit capot arrière (1) pour commander l'un des ports USB (5) pour obtenir un courant électrique de 5 V CC fourni en provenance d'un appareil électrique pour entraîner lesdits ventilateurs à courant continu (3) à des fins de rotation pour dissiper la chaleur dudit appareil électrique et pour commander l'autre port USB (5) pour mettre en oeuvre une fonction pour des vitesses de transmission de 12 mégaoctets par seconde et fournir 5 V CC pour une autre utilisation.

2. Connecteur de dissipation thermique selon la revendication 1, dans lequel ledit capot avant (2) est mis en oeuvre avec deux ouvertures de sortie d'air (21), ledit capot arrière (1) est mis en oeuvre avec deux ouvertures d'admission d'air relatives (12) et deux ventilateurs à courant continu (3) sont positionnés relativement entre deux ouvertures d'air opposées (12, 21) dudit capot avant et dudit capot arrière.

3. Connecteur de dissipation thermique selon la revendication 1 ou la revendication 2, comportant par ailleurs une prise de 12 V CC (9) et un interrupteur (6), ladite prise de 12 V CC (9) pouvant obtenir du courant électrique de 12 V CC fourni par un allume-cigare d'une voiture quand ledit interrupteur (6) est actionné et converti en 5 V CC sous la commande de ladite carte de circuit de commande électronique (4).

4. Connecteur de dissipation thermique selon la revendication 3, dans lequel quatre blocs de support (8) sont par ailleurs formés au niveau de chaque angle de la face rectangulaire dudit capot avant (2).
